(19) **Europäisches Patentamt / European Patent Office / Office européen des brevets**

(11) **EP 2 501 541 B1**

(12) **EUROPEAN PATENT SPECIFICATION**

(45) Date of publication and mention of the grant of the patent:
**17.06.2020 Bulletin 2020/25**

(21) Application number: **10779905.8**

(22) Date of filing: **17.11.2010**

(51) Int Cl.:
**B32B 3/12** (2006.01)

(86) International application number:
**PCT/US2010/057019**

(87) International publication number:
**WO 2011/062980 (26.05.2011 Gazette 2011/21)**

(54) **HONEYCOMB CORE BASED ON CARBON FIBER PAPER AND ARTICLES MADE FROM SAME**

AUS KOHLENSTOFFFASERPAPIER BASIERENDER WABENKERN UND DARAUS HERGESTELLTE ARTIKEL

MATÉRIAU EN NID D'ABEILLE À BASE DE PAPIER DE FIBRES DE CARBONE ET ARTICLES OBTENUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.11.2009 US 262966 P**

(43) Date of publication of application:
**26.09.2012 Bulletin 2012/39**

(73) Proprietor: **E. I. du Pont de Nemours and Company Wilmington, DE 19898 (US)**

(72) Inventors:
- **LEVIT, Mikhail, R.**
  **Glen Allen**
  **Virginia 23059 (US)**
- **KAWKA, Dariusz, Wlodzimierz**
  **Midlothian**
  **Virginia 23112 (US)**

(74) Representative: **Heinemann, Monica et al**
**Abitz & Partner**
**Patentanwälte mbB**
**Postfach 86 01 09**
**81628 München (DE)**

(56) References cited:
**EP-A1- 1 046 666**       **EP-A2- 1 205 509**
**US-A- 5 026 456**       **US-A- 5 139 843**
**US-A1- 2008 199 369**

- **DATABASE WPI Week 199435 Thomson Scientific, London, GB; AN 1994-283007 XP002634261, & JP 6 210777 A (SHOWA HIKOUKI KOGYO KK) 2 August 1994 (1994-08-02)**
- **DATABASE WPI Week 200453 Thomson Scientific, London, GB; AN 2004-546827 XP002634263, & JP 2004 196851 A (SUMITOMO BAYER URETHANE CO) 15 July 2004 (2004-07-15)**
- **DATABASE WPI Week 197915 Thomson Scientific, London, GB; AN 1979-28409B XP002634306, & JP 54 028291 A (TOYOBO KK) 2 March 1979 (1979-03-02)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention.

This invention relates to a structural honeycomb core made from a carbon fiber paper.

Background to the Invention

Core structures for sandwich panels from high performance fibrous materials, mostly in the form of honeycomb, are used in different applications but primarily in the aerospace industry where strength to weight or stiffness to weight ratios have very high values. Aramid fibers have been used for many years as the major component of paper substrates used to make honeycomb. Honeycombs from glass fiber and carbon fiber are also available but only in the form of a woven fabric substrate. Honeycomb production processes from paper substrates are of lower cost than processes for core from fabric substrates and therefore are highly desirable. The use of paper substrates also permit core of smaller cell size and lighter weight to be made. The challenge facing the producers of core from substrates of carbon paper is that carbon fibers are very brittle and are prone to fracturing and breaking during calendering of the paper. This presents significant problems as calendering to increase paper density is a necessary and important part of the process. A high fraction of broken carbon fiber caused by calendering will significantly impact the mechanical performance of the final honeycomb. There is a need therefore for a core structure from a high density calendered paper substrate containing carbon fiber having a minimum fraction of very short broken carbon fibers and, having the majority of carbon fibers of sufficient length to provide the desired properties in the final composite structure. Japanese patent application 6-210777 discloses a honeycomb core that uses a mixture of aramid fibers and carbon fibers as a base sheet for the cell walls. US2008199369 discloses a honeycomb made from paper, whereby its reference to inorganic and ceramic fibers include carbon fibres. The ceramic fibers have a distributed aspect ratio with a mode of 3-1000; (at a diameter of 1-25 um, pref. 6 um) and are impregnated with approx. 23 vol-% binder (epoxy, phenol) thereby producing a paper honeycomb.
US2008199369 is silent about non-circular carbon fibers.
EP1046666 discloses carbon fiber tow strands impregnated with hardenable polymeric resin compositions and honeycombs from woven fabric, whereby the fibers have an aspect ratio < 15.5.

BRIEF SUMMARY OF THE INVENTION

This invention is directed to a honeycomb structure comprising a plurality of interconnected walls having surfaces that define a plurality of honeycomb cells, wherein;

    (i) the cell walls are formed from a paper comprising 20-85 weight percent of carbon fiber,
    (ii) the paper has a fiber volume fraction of at least 35%,
    (iii) the carbon fiber has an arithmetic mean length of at least 0.5 mm, and
    (iv) the carbon fiber has a length weighted mean length of at least 0.9 mm.

The terms "fiber volume fraction", "arithmetic mean length" and "length weighted mean length" have the definitions as set forth under

TEST METHODS.

The invention is further directed to a structural sandwich panel comprising a resin impregnated honeycomb core having at least one facesheet attached to both exterior surfaces of the core wherein the cell walls of the core are formed from a paper comprising:

    (i) 20 to 85 weight percent of carbon fiber,
    (ii) 7.5 to 50 weight percent of para-aramid fiber, and
    (iii) 7.5 to 30 weight percent of polymeric binder, wherein
    (iv) the paper has a fiber volume fraction of at least 35%,
    (v) the carbon fiber has an arithmetic mean length of at least 0.5 mm, and
    (vi) the carbon fiber has a length weighted mean length of at least 0.9 mm.

## BRIEF DESCRIPTION OF THE DRAWINGS

Figures 1a and 1b are representations of views of a hexagonal shaped honeycomb.
Figure 2 is a representation of another view of a hexagonal cell shaped honeycomb.
Figure 3 is an illustration of honeycomb provided with facesheets.

## DETAILED DESCRIPTION OF THE INVENTION

This invention is directed to a honeycomb core comprising a plurality of interconnected walls having surfaces that define a plurality of honeycomb cells, wherein the cell walls are formed from a paper comprising 20-85 weight percent of carbon fibers having a non-circular cross section which, prior to impregnation with a resin, has a fiber volume fraction of at least 35%. The arithmetic mean length of carbon fiber is at least 0.5 mm. and the length weighted mean length at least 0.9 mm.

Preferably the carbon fibers have a linear density in the range of from 0.1 to 3.0 denier per filament (dpf) and a fiber cross-section aspect ratio (width to height) of at least 1.5:1. A non-circular carbon fiber cross section coupled with the relatively small fiber linear density provides a paper, after calendering and subsequent transformation into honeycomb, having a low percentage of short or broken carbon fibers. Preferably the arithmetic mean length of the carbon fibers is at least 0.7 mm. Preferably the length weighted mean length of the carbon fibers is at least 1.2 mm. The fiber cross sections, for example, may be dog-bone, bean, oval, ribbon or strip shaped.

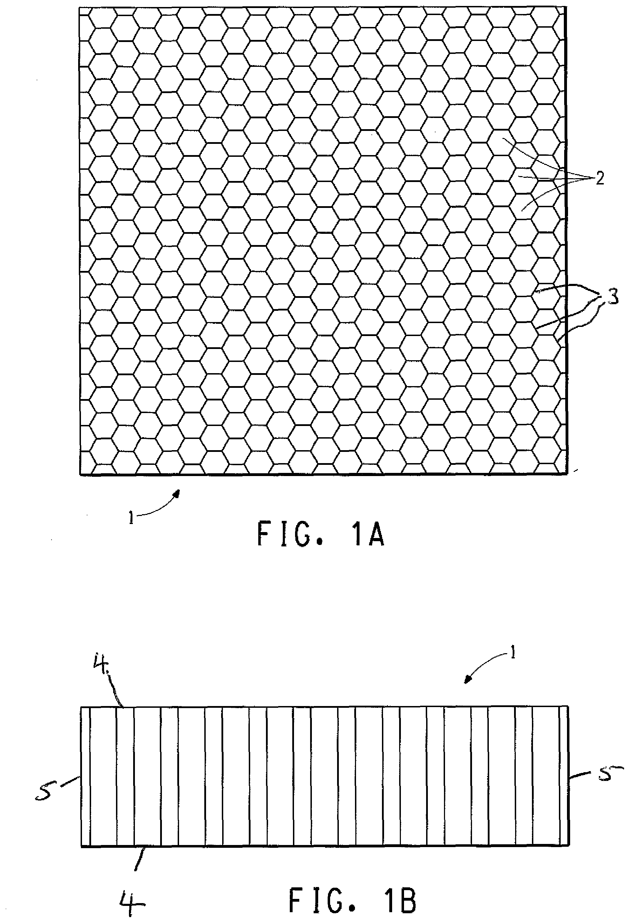

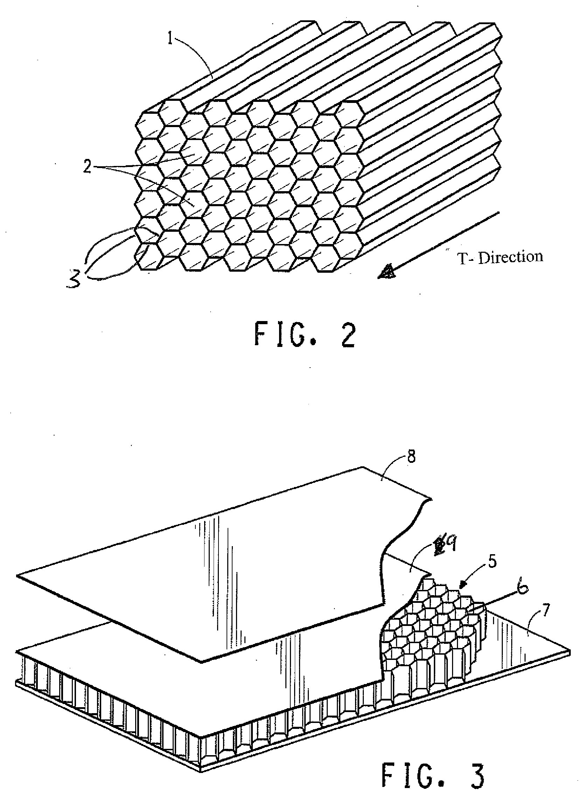

Figure 1a is a plan view illustration of one honeycomb 1 of this invention and shows cells 2 formed by cell walls 3. Figure 1b is an elevation view of the honeycomb shown in Figure 1a and shows the two exterior surfaces, or faces 4 formed at both ends of the cell walls. The core also has edges 5. Figure 2 is a three-dimensional view of the honeycomb. Shown is honeycomb 1 having hexagonal cells 2 and cell walls 3. The "T" dimension or the thickness of the honeycomb is shown at 10 in Figure 2. Hexagonal cells are shown; however, other geometric arrangements are possible with square, over-expanded and flex-core cells being among the most common possible arrangements. Such cell types are well known in the art and reference can be made to *Honeycomb Technology* by T. Bitzer (Chapman & Hall, publishers, 1997) for additional information on possible geometric cell types.

In a further embodiment, the invention is directed to a honeycomb core comprising a plurality of interconnected walls having surfaces that define a plurality of honeycomb cells, wherein the cell walls are formed from a paper comprising 20-85 weight percent of carbon fibers having a non-circular cross section, 7.5-50 weight percent of aramid fiber and 7.5-30 weight percent of polymeric binder that, prior to impregnation with a resin, has, a fiber volume fraction of at least 35%. The arithmetic mean length of carbon fiber is at least 0.5 mm and the length weighted mean length at least 0.9 mm.

In yet another preferred embodiment, the paper, prior to the impregnation with a resin, has a machine to cross direction tensile strength ratio no greater than 2.2 in order to maximize properties of the finished honeycomb core.

Carbon fiber used in this invention may be in the form of short cut or chopped fiber, also known as floc. Floc is made by cutting continuous filament fibers into short lengths without significant fibrillation. An example of a suitable length range is from 1.5 mm to 20 mm. Carbon fibers suitable for use in this invention can be made from either polyacrylonitrilie (PAN) or pitch precursor using known technological methods, for example as described in: J.B. Donnet and R. C. Bansal. Carbon Fibers, Marcel Dekker, 1984. A non-round carbon fiber cross-section is formed during spinning of the precursor. Preferably the carbon fiber has a modulus of at least 1667 grams per dtex (1500 grams per denier) and a tenacity of at least 28 grams per dtex (25 grams per denier) defined by testing resin-impregnated and consolidated test specimens made from continuous filament yarn or tow.

If the carbon fiber floc length is less than 1.5 millimeters, it is generally too short to be processed into the saturable paper structure and provide the final composite with adequate modulus and strength; if the floc length is more than 20 millimeters, it is very difficult to form uniform wet-laid webs. Floc having a linear density less than 0.2 dpf and especially less than 0.1 dpf is difficult to produce with adequate cross sectional uniformity and reproducibility; if the floc linear density is more than 3.0 dpf, it is very difficult to form uniform papers of light to medium basis weights.

The surface of the carbon fibers may optionally be oxidized to improve their adhesion to the matrix resin used to coat the paper. Oxidation methods of wet oxidation, dry oxidation, anodic oxidation, and the like are known in the industry and are described in more detail in "Fibre Reinforcements for Composite Materials", Composite Materials Series, Volume 2, Editor: A.R. Bunsell, Elsevier, 1988".

Aramid fibers used in this invention can be in the form of floc, pulp, or a combination of thereof. As employed herein the term aramid means a polyamide wherein at least 85% of the amide (-CONH-) linkages are attached directly to two aromatic rings. Additives can be used with the aramid. In fact, it has been found that up to as much as 10 percent, by weight, of other polymeric material can be blended with the aramid or that copolymers can be used having as much as 10 percent of other diamine substituted for the diamine of the aramid or as much as 10 percent of other diacid chloride substituted for the diacid chloride of the aramid. The term "pulp", as used herein, means particles of fibrous material having a stalk and fibrils extending generally therefrom, wherein the stalk is generally columnar and 10 to 50 micrometers in diameter and the fibrils are fine, hair-like members generally attached to the stalk measuring only a fraction of a micrometer or a few micrometers in diameter and 10 to 100 micrometers long. Aramid fiber floc is of a similar length to carbon fiber floc. Both meta and para aramid fibers are suitable and are available from E.I. DuPont de Nemours, Richmond, VA under the tradenames Kevlar® and Nomex® and from Teijin Twaron, Conyers, GA under the tradename Twaron®. In one embodiment, the aramid fiber floc has a non-circular cross section aspect ratio of at least 1.5:1. Further, in a preferred embodiment, the cross-section aspect ratio of all floc fibers in the paper composition is at least 1.5:1.

The preferred pulp material is p-aramid. However a blend of p-aramid with other synthetic or natural fibers such as liquid crystal polyester, polyareneazole, meta-aramid, and cellulose can be utilized. One illustrative process for making aramid pulp is disclosed in United States Patent No. 5,084,136 to Haines et al.

Different thermoset and thermoplastic resins can be used as a polymeric binder in the paper of this invention. These resins can be supplied in the form of fibrids, flakes, powder, and floc. The term "fibrids" as used herein, means a very finely-divided polymer product of small, filmy, essentially two-dimensional, particles known having a length and width of 100 to 1000 micrometers and a thickness of 0.1 to 1 micrometer. Preferable types of binder resins are aramids, polyimides, phenolics, and epoxies. However, other types of the resins can also be used.

Fibrids are typically made by streaming a polymer solution into a coagulating bath of liquid that is immiscible with the solvent of the solution. The stream of polymer solution is subjected to strenuous shearing forces and turbulence as the polymer is coagulated. The fibrid material of this invention can be selected from meta or para-aramid or blends thereof. More preferably, the fibrid is a meta-aramid.

The paper of the core of this invention can include small amounts of inorganic particles including mica, vermiculite, and the like; the addition of these performance enhancing additives being to impart properties such as improved fire resistance, thermal conductivity, dimensional stability, and the like to the paper and the final core structure.

The fiber volume fraction in the paper of this invention is from 35 to 70%. Such a range permits impregnation of the coating resin throughout the thickness of the paper thus providing an optimum paper to coating resin weight distribution ratio in the finished core. Preferably this paper to coating resin weight ratio is in the range from 8:1 to 1:1. The thickness of the paper used in this invention is dependent upon the end use or desired properties of the core structure. In some embodiments, the thickness is from 15 to 125 micrometers (0.6 to 5 mil). More preferably, the thickness is from 25 to 100 micrometers (1 to 4 mil). In some embodiments, the basis weight of the paper is from 10 to 100 grams per square meter (0.3 to 3 ounces per square yard).

The paper used to make the honeycomb core of this invention can be formed on equipment of any scale, from laboratory screens to commercial-sized papermaking machinery, including such commonly used machines as Fourdrinier or inclined wire paper machines. A typical process involves making a dispersion of fibrous material such as floc and/or pulp and fibrids in an aqueous liquid, draining the liquid from the dispersion to yield a wet composition and drying the wet paper composition. The dispersion can be made either by dispersing the fibers and then adding the fibrids or by dispersing the fibrids and then adding the fibers. The final dispersion can also be made by combining a dispersion of fibers with a dispersion of the fibrids; the dispersion can optionally include other additives such as inorganic materials. The concentration of fibers from the floc and pulp in the dispersion can range from 0.01 to 1.0 weight percent based on the total weight of the dispersion. An example of a suitable range for polymer binder concentration is that it should be equal to or less than 30 weight percent based on the total weight of solids. In a typical process, the liquid of the dispersion is generally water, but may include various other materials such as pH-adjusting materials, forming aids, surfactants, defoamers and the like. The aqueous liquid is usually drained from the dispersion by conducting the dispersion onto a screen or other perforated support, retaining the dispersed solids and then passing the liquid to yield a wet paper composition. The wet composition, once formed on the support, is usually further dewatered by vacuum or other pressure forces and further dried by evaporating the remaining liquid.

In one preferred embodiment, the fiber and the polymer binder in the form of fibrids can be slurried together to form a mix that is converted to paper on a wire screen or belt. Reference is made to United States Patents 4,698,267 and 4,729,921 to Tokarsky; 5,026,456 to Hesler et al.; 5,223,094 and 5,314,742 to Kirayoglu et al for illustrative processes for forming papers from aramid fibers and aramid fibrids.

Once the paper is formed, it has to be calendered to the desired void content/apparent density. An optional final step in the paper manufacturing process can include a surface treatment of the paper to enhance adhesion of the coating resin to the paper. This is carried out in an air, corona or plasma atmosphere. Alternative chemical or thermal surface modifications of the paper may also be appropriate.

Processes for converting the web substrates described above into honeycomb core are well known to those skilled in the art and include expansion and corrugation. The expansion process is particularly well suited for making core from paper. Such processes are further detailed on page 721 of the Engineered Materials Handbook, Volume 1 - Composites, ASM International, 1988. The paper web can be coated or impregnated with a resin before or after formation of the honeycomb. Resin can be employed which is crosslinked after application to the paper to optimize final properties such as stiffness and strength. Examples of resins include epoxy, phenolic, acrylic, polyimide and mixtures thereof with phenolic being preferred. United States Military Specification MIL-R-9299C specifies appropriate resin properties. The final mechanical strength of core is result of a combination of several factors. The principal known contributors are paper composition and thickness, cell size, and final core density such as after coating with resin. Cell size is the diameter of an inscribed circle within the cell of a honeycomb core. Typical cell sizes range from 3.2 mm to 6.2 mm (1/8 to 1/4 inch) but other sizes are possible. Final core densities are normally in the range of 29 - 240 kg/m$^3$ (1.8 to 15 lb/ft$^3$)..

This invention also directed to a structural sandwich panel comprising a resin impregnated honeycomb core having at least one facesheet attached to both exterior surfaces of the core wherein the cell walls of the core are formed from a paper which, prior to impregnation with a resin, comprises from 20 to 85 weight percent of carbon fibers having a non-circular cross section, the paper further having a fiber volume fraction of at last 35%, an arithmetic mean length of carbon fiber of at least 0.5 mm and a length weighted mean length of at least 0.9 mm.

Figure 3 shows a structural sandwich panel 5 assembled from a honeycomb core 6 with facesheets 7 and 8, attached to the two exterior surfaces of the core. The preferred facesheet material is a prepreg, a fibrous sheet impregnated with thermoset or thermoplastic resin, although metallic face sheets may also be utilized. With metallic face sheets, and in some circumstances with prepreg, an adhesive film 9 is also used. Normally there are at least two prepreg facesheets on either side of the core.

This invention is further directed to a structural sandwich panel comprising a resin impregnated honeycomb core having at least one facesheet attached to both exterior surfaces of the core wherein the cell walls of the core are formed from a paper which, prior to impregnation with a resin, comprises 20-85 weight percent of carbon fibers having a non-circular cross section, 7.5-50 weight percent of aramid fiber and 7.5-30 weight percent of polymeric binder, the paper further having a volume fraction of fibers of at least 35%. The arithmetic mean length of the carbon fibers is at least 0.5 mm and the length weighted mean length at least 0.9 mm. Further, the paper to coating resin weight ratio in the core is in the range from 8:1 to 1:1.

## TEST METHODS

The fiber volume fraction of the paper (volume of the paper structure occupied by fibers) is calculated by the equation:

$$\text{Volume fraction of fibers (\%)} = 100 \times (\text{apparent density of the paper}) \times ((\text{weight fraction of fiber 1})/(\text{density of fiber 1}) + (\text{weight fraction of fiber 2})/(\text{density of fiber 2}) + \ldots + (\text{weight fraction of fiber n})/(\text{density of fiber n})),$$

where n is the total number of different fibers in the paper composition.

Paper apparent density is calculated using the paper thickness as measured by ASTM D374-99 and the basis weight as measured by ASTM D646-96. Fiber denier is measured using ASTM D1907-07.

The machine to cross direction ratio of tensile strength for the paper is defined by measuring paper tensile strength in the machine and cross directions in accordance with ASTM D828-97 and dividing the machine value by the cross direction value.

The arithmetic mean length and length average mean length of carbon fibers are determined by cutting single cell walls at their boundaries with the double walls, dissolving or decomposing the organic ingredients of the wall with sulfuric acid or other suitable liquid, depositing carbon fibers on glass or other suitable filter media and conducting microscopic analysis of carbon fiber length with a total count of measured carbon fibers being not less than 200. Only fibers with length of 0.01 mm or higher are counted. The arithmetic mean length is calculated based on the equation:

uation:

The length weighted mean length is calculated based on the equation:

on:

where L1, L2 etc. are all measured lengths, and N1, N2, etc. is the number of fibers with a given length.

The aspect ratio of a carbon fiber cross-section is determined by measuring of largest (width) and smallest (height) dimensions of the fiber cross-section under a microscope and dividing the first number by the second number.

Modulus and tenacity of carbon fibers is measured in accordance with ASTM D 4018-99 for test specimens of continuous yarn or tow that have been resin impregnated and consolidated.

## EXAMPLES

### Example 1

A paper comprising carbon floc, p-aramid floc, p-aramid pulp, and m-aramid fibrids is formed on conventional paper forming equipment. The composition of the paper is 40 weight percent carbon fiber floc, 15 weight percent p-aramid floc, 30 weight percent of p-aramid pulp, and 15 weight percent m-aramid fibrids.

The carbon floc has a nominal filament linear density of 0.70 dtex per filament (0.62 denier per filament), a cross sectional aspect ratio of 3:1, a cut length of 3.2 mm, a tenacity of 24.1 grams per dtex (1.92 N/tex), and an initial modulus of 1889 grams per dtex (150 N/tex).

The p-aramid floc has a nominal filament linear density of 1.7 dtex per filament (1.5 denier per filament), a cut length of 6.4 mm, a tenacity of 26.8 grams per dtex (2.13 N/tex), and initial modulus of 1044 grams per dtex (83 N/tex).

The p-aramid pulp is produced from the described p-aramid floc by high shear refining to a Canadian Standard Freeness (CSF) of about 180 ml. The meta-aramid fibrids are made as described in US Patent 3,756,908 to Gross.

The paper is calendered at 330° C to produce a finished paper having a thickness of 48 micrometers, a basis weight of 40.7 g/m$^2$ (1.2 oz/yd$^2$), an apparent density of 0.85 g/cm$^3$, a fiber volume fraction of 44% and a machine to cross directional tensile strength ratio of 1.1

A honeycomb is then formed from the calendered paper. Node lines of solvated adhesive are applied to the paper surface at a width of 2 mm and a pitch of 5 mm and the solvent removed.

The sheet with the adhesive node lines is cut into 500 mm lengths. A plurality of sheets are stacked one on top of the other, such that each of the sheets is shifted to the other by half a pitch or a half the interval of the applied adhesive node lines. The shift occurs alternately to one side or the other, so that the final stack is uniformly vertical. The width of the node line and the pitch offset is such that, on expansion, the cell size is 3.2 mm. The number of stacked sheets is then hot-pressed between plates at the softening point of the adhesive, causing the adhesive node lines to flow; once the heat is removed the adhesive hardens to bond the sheets together at the node lines. The bonded aramid sheets are then expanded in the direction counter to the stacking direction to form cells having an equilateral cross section. Each of the sheets are extended between each other such that the sheets are folded along the edges of the bonded node lines and the portions not bonded are extended in the direction of the tensile force to separate the sheets from each other.

The expanded honeycomb is then placed in a bath containing solvent-based MIL-R-9299C standard phenolic resin. The phenolic resin is used in a liquid form wherein the resin is dissolved in ethanol. The resin adheres to and coats the interior surface of the cell walls as well as penetrating into the pores of the paper. After impregnating with resin, the honeycomb is taken out from the bath and is dried in a drying oven by hot air to remove the solvent and cure the phenolic resin. The impregnation step in the resin bath and the drying step in the drying oven are repeated two more times.

The final core, after coating with resin, will have a density of 48 kg/m$^3$ (3 lb/ft$^3$) and a cell size of 3.2 mm (1/8 inch). The arithmetic mean length of carbon fibers in the cell wall is at least 0.5 mm and the length weighted mean length at least 0.9 mm.

### Comparative Example A

A paper is made as in Example 1 but with carbon fiber having a circular cross section, that is, having a nominal aspect ratio of 1:1. The final paper will have a thickness of 48 micrometers, a basis weight of 40.7 g/m$^2$ (1.2 oz/yd$^2$), an apparent density of 0.85 g/cm$^3$, a fiber volume fraction of 44% and a machine to cross directional tensile strength ratio of 1.1.

A honeycomb is made from this paper in the same manner as in Example 1. The final core, after coating with resin, will have a density of 48 kg/m$^3$ (3 lb/ft$^3$) and a cell size of 3.2 mm (1/8). The arithmetic mean length of carbon fibers in the cell wall is less than 0.5 mm and the length weighted mean length is less than 0.9 mm.

For the same cell size, the same final core density and the same resin content, the core of the current invention made from paper having carbon fiber of a non-circular cross section as per Example 1 has improved shear strength in comparison with other carbon fiber paper cores in which the carbon fibers have a substantially circular cross section as per Comparative Example A.

**Example 2**

Two prepreg facesheets are placed on either side of a 10mm thick slice of honeycomb from Example 1. The prepreg is 8552 epoxy resin on G0803 style carbon fiber fabric available from Hexcel Corporation, Dublin, CA.

The resin content in the prepreg is 35%. A release layer is placed on both outer surfaces of the prepreg and the prepreg-honeycomb assembly cured in a press at 180°C for 120 minutes to produce a sandwich panel.

**Claims**

1. A honeycomb structure comprising a plurality of interconnected walls having surfaces that define a plurality of honeycomb cells, the cell walls being formed from a paper having a fiber volume fraction of at least 35 % and comprising 20-85 weight percent of carbon fiber, **characterized in that**

    (i) the carbon fiber has a fiber cross-section aspect ratio of at least 1.5:1,
    (ii) the carbon fiber has an arithmetic mean length of at least 0.5 mm,
    (iii) the carbon fiber has a length weighted mean length of at least 0.9 mm, and
    (iv) wherein the carbon fibers have a linear density in the range of from 0.111 dTex to 3.333 dTex (0.1 to 3.0 dpf), measured using ASTM D1907-07.

2. A honeycomb structure according to claim 1 wherein the arithmetic mean length of carbon fiber is at least 0.7 mm and the length weighted mean length is at least 1.2 mm.

3. A honeycomb structure according to claim 1 wherein all floc fibers in the paper composition have a fiber cross-section aspect ratio of at least 1.5:1.

4. A honeycomb structure according to claim 1 wherein, prior to impregnation with resin, the paper has a machine to cross direction tensile ratio no greater than 2.2.

5. A honeycomb structure according to claim 1 wherein the paper has a fiber volume fraction of at least 45 %.

6. A honeycomb structure according to claim 1 wherein the paper is coated or impregnated with resin selected from the group consisting of phenolic, polyimide, epoxy, acrylic and combinations thereof.

7. A honeycomb structure according to claim 6 wherein the impregnated paper has a paper to resin weight ratio in the range of from 8:1 to 1:1.

8. A honeycomb structure according to claim 1 wherein the paper further comprises 7.5 to 50 weight percent of para-aramid fiber and 7.5 to 30 parts by weight percent of polymeric binder

9. A honeycomb structure according to claim 8 wherein the paper is impregnated with resin selected from the group consisting of phenolic, polyimide, epoxy and combinations thereof.

10. A honeycomb structure according to claim 9 wherein the impregnated paper has a paper to resin weight ratio in the range of from 8:1 to 1:1.

11. A structural sandwich panel comprising a resin impregnated honeycomb core having at least one facesheet attached to both exterior surfaces of the core wherein the cell walls of the core are formed from a paper as defined in claim 1, 3 or 4, further comprising:

    (i) 7.5 to 50 weight percent of para-aramid fiber, and
    (ii) 7.5 to 30 weight percent of polymeric binder.

**Patentansprüche**

1. Wabengebilde umfassend eine Mehrzahl von miteinander verbundenen Wänden, die Oberflächen aufweisen, die eine Mehrzahl von Wabenzellen definieren, wobei die Zellwände aus einem Papier gebildet sind, das einen Faservolumenanteil von mindestens 35 % aufweist und 20-85 Gewichtsprozent Kohlenstofffaser umfasst, **dadurch gekennzeichnet, dass**

(i) die Kohlenstofffaser ein Faserquerschnittsaspektverhältnis von mindestens 1,5:1 aufweist,

(ii) die Kohlenstofffaser eine arithmetische mittlere Länge von mindestens 0,5 mm aufweist,

(iii) die Kohlenstofffaser eine längengewichtete mittlere Länge von mindestens 0,9 mm aufweist und

(iv) wobei die Kohlenstofffasern eine lineare Dichte im Bereich von 0,111 dtex bis 3,333 dtex (0,1 bis 3,0 dpf, unter Anwendung von ASTM D1907-07 gemessen, aufweisen.

2. Wabengebilde nach Anspruch 1, wobei die arithmetische mittlere Länge der Kohlenstofffaser mindestens 0,7 mm beträgt und die längengewichtete mittlere Länge mindestens 1,2 mm beträgt.

3. Wabengebilde nach Anspruch 1, wobei alle Flockfasern in der Papierzusammensetzung ein Faserquerschnittsaspektverhältnis von mindestens 1,5:1 aufweisen.

4. Wabenstruktur nach Anspruch 1, wobei, vor Imprägnieren mit Harz, das Papier ein Maschinen- zu Querrichtungszugfestigkeitsverhältnis von nicht mehr als 2,2 aufweist.

5. Wabenstruktur nach Anspruch 1, wobei das Papier einen Faservolumenanteil von mindestens 45 % aufweist.

6. Wabenstruktur nach Anspruch 1, wobei das Papier mit Harz beschichtet oder imprägniert ist, das aus der Gruppe ausgewählt wird bestehend aus Phenol-, Polyimid-, Epoxid- Acrylharz und Kombinationen davon.

7. Wabenstruktur nach Anspruch 6, wobei das imprägnierte Papier ein Papier- zu Harzgewichtsverhältnis im Bereich von 8:1 bis 1:1 aufweist.

8. Wabenstruktur nach Anspruch 1, wobei das Papier ferner 7,5 bis 50 Gewichtsprozent Para-Aramidfaser und 7,5 bis 30 Gewichtsprozent polymeres Bindemittel umfasst.

9. Wabenstruktur nach Anspruch 8, wobei das Papier mit Harz imprägniert wird, das aus der Gruppe ausgewählt wird bestehend aus Phenol-, Polyimid-, Epoxidharz und Kombinationen davon.

10. Wabenstruktur nach Anspruch 9, wobei das imprägnierte Papier ein Papier- zu Harzgewichtsverhältnis im Bereich von 8:1 bis 1:1 aufweist.

11. Strukturelle Sandwichplatte umfassend einen harzimprägnierten Wabenkern, der mindestens eine Verkleidungsplatte aufweist, die auf beide Außenseite des Kerns aufgebracht ist, wobei die Zellwände des Kerns aus einem Papier wie in Anspruch 1, 3 und 4 definiert, gebildet sind, umfassend:

(i) 7,5 bis 50 Gewichtsprozent Para-Aramidfaser und

(ii) 7,5 bis 30 Gewichtsprozent polymeres Bindemittel.


**Revendications**

1. Structure en nid d'abeilles comprenant une pluralité de parois interconnectées ayant des surfaces qui définissent une pluralité d'alvéoles en nid d'abeilles, les parois des alvéoles étant formées à partir d'un papier ayant une fraction volumique de fibre d'au moins 35 % et comprenant de 20 à 85 pour cent en poids de fibre de carbone, **caractérisée en ce que**

(i) la fibre de carbone présente un rapport d'aspect en coupe transversale de fibre d'au moins 1,5:1,

(ii) la fibre de carbone présente une longueur arithmétique moyenne d'au moins 0,5 mm,

(iii) la fibre de carbone présente une longueur moyenne pondérée en longueur d'au moins 0,9 mm, et

(iv) les fibres de carbone ayant une densité linéaire située dans la plage de 0,111 dTex à 3,333 dTex (de 0,1 à 3,0 dpf), mesurée en utilisant la norme ASTM D1907-07.

2. Structure en nid d'abeilles selon la revendication 1 dans laquelle la longueur arithmétique moyenne de la fibre de carbone est d'au moins 0,7 mm et la longueur moyenne pondérée en longueur est d'au moins 1,2 mm.

3. Structure en nid d'abeilles selon la revendication 1 dans laquelle toutes les fibres de floc dans la composition de papier présentent un rapport d'aspect en coupe transversale de fibre d'au moins 1,5:1.

4. Structure en nid d'abeilles selon la revendication 1 dans laquelle, avant l'imprégnation avec la résine, le papier présente un rapport de traction dans le sens de la machine et en travers non supérieur à 2,2.

5. Structure en nid d'abeilles selon la revendication 1 dans laquelle le papier présente une fraction volumique de fibre d'au moins 45 %.

6. Structure en nid d'abeilles selon la revendication 1 dans laquelle le papier est revêtu ou imprégné de résine sélectionnée dans le groupe constitué de la résine phénolique, de polyimide, époxy, acrylique et de leurs combinaisons.

7. Structure en nid d'abeilles selon la revendication 6 dans laquelle le papier imprégné présente un rapport en poids du papier à la résine situé dans la plage de 8:1 à 1:1.

8. Structure en nid d'abeilles selon la revendication 1, le papier comprenant en outre de 7,5 à 50 pour cent en poids de fibre de para-aramide et de 7,5 à 30 parties en poids pour cent du liant polymère.

9. Structure en nid d'abeilles selon la revendication 8 dans laquelle le papier est imprégné de résine sélectionnée dans le groupe constitué de la résine phénolique, de polyimide, époxy et de leurs combinaisons.

10. Structure en nid d'abeilles selon la revendication 9 dans laquelle le papier imprégné présente un rapport en poids du papier à la résine situé dans la plage de 8:1 à 1:1.

11. Panneau structurel en sandwich comprenant un cœur en nid d'abeilles imprégné de résine ayant au moins une feuille avant fixée aux deux surfaces extérieures du cœur dans lequel les parois des alvéoles du cœur sont formées d'un papier tel que défini selon la revendication 1, 3 ou 4, comprenant en outre:

    (i) de 7,5 à 50 pour cent en poids de fibre de para-aramide, et
    (ii) de 7,5 à 30 pour cent en poids de liant polymère.

FIG. 1A

FIG. 1B

FIG. 2

T- Direction

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6210777 A
- US 2008199369 A
- EP 1046666 A
- US 5084136 A, Haines
- US 4698267 A
- US 4729921 A, Tokarsky
- US 5026456 A, Hesler
- US 5223094 A
- US 5314742 A, Kirayoglu
- US 3756908 A, Gross

### Non-patent literature cited in the description

- **J.B. DONNET ; R. C. BANSAL.** Carbon Fibers. Marcel Dekker, 1984
- Fibre Reinforcements for Composite Materials. Composite Materials Series. Elsevier, 1988, vol. 2
- Engineered Materials Handbook, Volume 1 - Composites. ASM International, 1988, vol. 1, 721